# FASCICULE DE BREVET EUROPEEN

(11) **EP 2 320 531 B1**
(45) Date de publication et mention de la délivrance du brevet: **16.01.2013**
(21) Numéro de dépôt: 10290456.2
(22) Date de dépôt: 26.08.2010
(51) Int. Cl.: H02B 1/32

(54) **Support de rail de montage d'appareillages électriques modulaires et châssis pour coffret ou tableau de distribution électrique comportant un tel support de rail**
Schienenauflagerung zur Montage von modularen elektrischen Geräten und Gestell für elektrischen Verteiler- oder Schaltkasten, der eine solche Schienenauflagerung umfasst
Support of a rail for the installation of modular electrical appliances and frame for an electrical panel or box comprising such a rail support

(30) Priorité: 05.11.2009 FR 0905314
(43) Date de publication de la demande: 11.05.2011
(73) Titulaire: Legrand France, 87000 Limoges (FR); Legrand SNC, 87000 Limoges (FR)
(72) Inventeur: Maytraud, Frédéric, 87400 Eybouleuf (FR); Baudou, Alain, 87000 Limoges (FR)
(74) Mandataire: Orsini, Fabienne

(56) Documents cités:
- EP-A1- 1 615 308
- EP-A1- 1 816 715

## Description

### DOMAINE TECHNIQUE AUQUEL SE RAPPORTE L'INVENTION

La présente invention concerne de manière générale les coffrets et tableaux de distribution électrique.

Elle concerne plus particulièrement un support de rail de montage d'appareillages électriques modulaires, tel que défini dans la partie préambule de la revendication 1.

Elle concerne également un châssis de coffret ou tableau de distribution électrique comportant, d'une part, deux montants métalliques qui présentent chacun une paroi frontale bordée de deux bords tombants, et, d'autre part, au moins un rail de montage d'appareillages électriques modulaires.

### ARRIÈRE-PLAN TECHNOLOGIQUE

Généralement, dans les coffrets et tableaux de distribution électrique du type précité, le châssis est rapporté de telle sorte que ses montants métalliques soient positionnés verticalement sur le fond du coffret ou tableau de distribution électrique, en parallèle et à distance l'un de l'autre.

Les rails de montage, qui sont destinés à supporter les appareillages électriques modulaires, sont alors positionnés horizontalement entre ces montants métalliques et sont fixés sur ces montants soit directement, soit via un support de rail du type précité.

On connaît en particulier du document EP 1 816 715 un tel support de rail qui présente une plate-forme d'accueil d'un rail de montage, surélevée pour faciliter les opérations de câblages des appareillages électriques modulaires.

Dans ce document, le support de rail comporte une ouverture oblongue qui débouche dans la rainure formant glissière. Grâce à la forme oblongue de cette ouverture, le support de rail peut être fixé à la hauteur désirée sur le fond du socle du coffret de distribution électrique, au moyen d'une vis de fixation dont la tête prend appui sur les bords longitudinaux de cette ouverture oblongue et dont le corps fileté traverse ladite rainure pour se visser dans un puits de vissage issu du fond du socle du coffret de distribution électrique.

L'inconvénient de ce support de rail est que son installation nécessite l'utilisation d'un outil adéquat tel qu'un tournevis.

Le document EP 1615308 divulgue des moyens (40, 41, figures 7 et 8) permettant de fixer un support de rail, qui sont moyens mobiles d'encliquetage.

### OBJET DE L'INVENTION

Afin de remédier à l'inconvénient précité de l'état de la technique, la présente invention propose un nouveau support de rail agencé pour se fixer automatiquement à un montant métallique, sans intervention d'outil.

Plus particulièrement, on propose selon l'invention un support tel que défini dans la revendication 1.

Ainsi, le support peut être rapporté et fixé sur le montant métallique sans outil, en faisant seulement glisser la rainure le long du montant métallique de telle sorte que ses moyens anti-arrachement s'engagent sous la butée complémentaire du montant métallique et que ses moyens de verrouillage se verrouillent automatiquement sur le montant métallique.

Par ailleurs, grâce à l'invention, les contraintes mécaniques liées à la tenue à l'arrachement du support de rail et à la tenue verticale du support de rail le long du montant métallique sont dissociées, ce qui permet de prévoir des moyens anti-arrachement particulièrement résistants.

De cette manière, lors des opérations de câblage des appareillages électriques modulaires durant lesquelles les rails sont généralement soumis à d'importants efforts de traction, le support de rail reste parfaitement fixé au montant métallique.

Par ailleurs, grâce à la rigidité des moyens de fixation du support de rail sur le montant métallique, il est possible d'assembler deux montants métalliques avec deux rails via quatre supports de rail selon l'invention en dehors du coffret ou tableau de distribution électrique, puis de rapporter cet ensemble rigide à l'intérieur du coffret ou tableau de distribution électrique, sans risque de déformation de cet ensemble.

D'autres caractéristiques avantageuses et non limitatives du support de rail conforme à l'invention sont définies dans les revendications 2 à 12.

On propose également selon l'invention un châssis de coffret ou tableau de distribution électrique tel que défini dans la revendication 13.

D'autres caractéristiques avantageuses et non limitatives du châssis conforme à l'invention sont définies dans les revendications 14 à 16.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective d'un châssis d'un coffret ou d'un tableau de distribution électrique selon l'invention, comportant deux montants métalliques, deux rails de montage et quatre supports de rail ;
- les figures 2 et 3 sont des vues en perspective sous deux angles différents de l'un des supports de rail de la figure 1 ;
- la figure 4 est une vue en coupe selon le plan A-A de la figure 1;
- les figures 5 à 10 sont des schémas de montage de l'un des supports de rail sur l'un des montants métalliques de la figure 1.

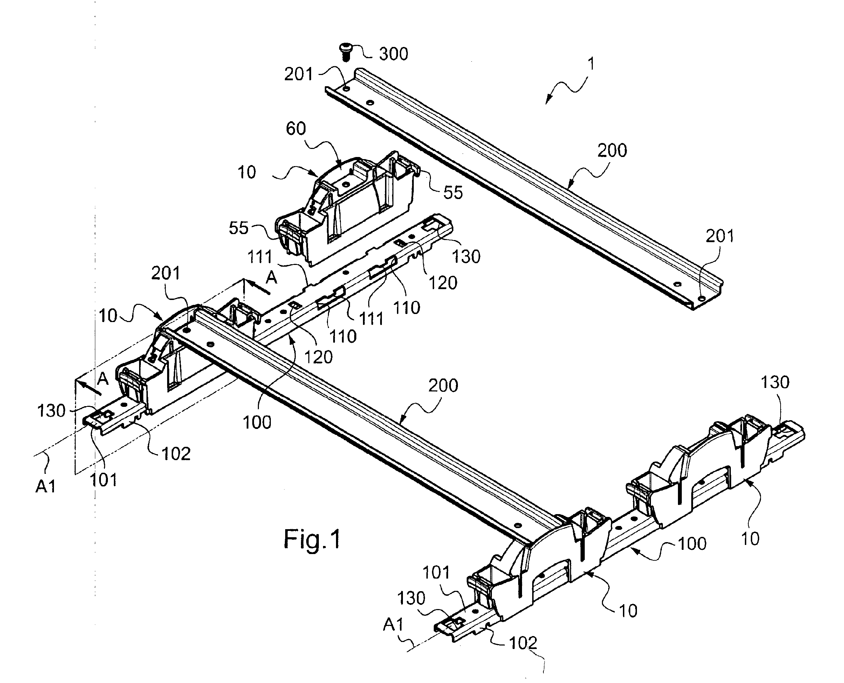

Sur la figure 1, on a représenté schématiquement un châssis 1 d'un coffret ou d'un tableau de distribution électrique. Un tel châssis 1 est destiné à être logé dans une boîte appartenant au coffret ou au tableau de distribution électrique.

Ce châssis 1 est agencé pour supporter des appareillages électriques modulaires (non représentés sur les figures).

Il comporte à cet effet ici deux montants métalliques 100 liés transversalement par deux rails de montage 200 (ou rail DIN) via quatre supports de rail 10.

Les deux montants métalliques 100 sont des profilés en acier à section en U, chacun allongé selon un axe appelé axe longitudinal de glissement A1. Ils présentent donc une paroi frontale 101 bordée de deux bords tombants 102 à angle droit, et sont chacun formés d'une seule pièce par découpage et pliage d'un feuillard métallique.

Ces deux montants métalliques 100 sont destinés à être fixés verticalement au fond de la boîte du coffret ou du tableau de distribution électrique, parallèlement et à distance l'un de l'autre. Ils comportent à cet effet, à chacune de leurs extrémités, une ouverture 130 agencée pour accueillir un élément de fixation (non représenté) rattaché au fond de la boîte.

Les rails de montage 200 sont des profilés métalliques destinés à être positionnés horizontalement entre les deux montants métalliques 100 pour porter les appareillages électriques modulaires sur deux rangées d'appareillages espacées l'une de l'autre.

Les extrémités de ces rails de montage 200 présentent à cet effet des ouvertures circulaires 201 d'accueil de vis de fixation auto-taraudeuses 300.

Grâce à ces vis de fixation auto-taraudeuses 300, chaque rail de montage 200 peut être fixé aux montants métalliques 100 soit directement, soit par l'intermédiaire de deux supports de rails 10.

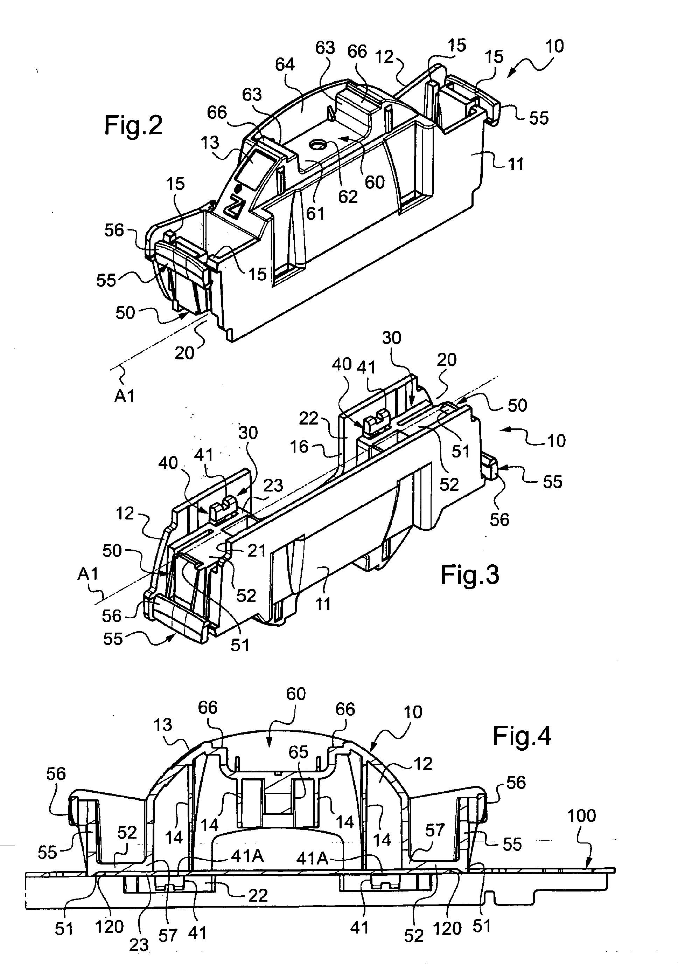

On a représenté sur les figures 2 à 4 l'un des supports de rail 10 de la figure 1, qui est donc destiné à porter l'extrémité de l'un des deux rails de montage 200.

Ce support de rail 10 est un élément massif qui comporte, d'une part, une rainure 20 formant glissière adaptée à être rapportée en position d'engagement sur l'un des montants métalliques 100 pour y coulisser, et, d'autre part, des moyens de fixation 30 en position de blocage de la rainure 20 sur le montant métallique 100.

Selon une caractéristique particulièrement avantageuse de l'invention, ces moyens de fixation 30 comportent, d'une part, des moyens anti-arrachement 40 agencés pour s'engager sous une butée complémentaire 111 du montant métallique 100 à la faveur d'un coulissement de la rainure 20 sur le montant métallique 100 depuis la position d'engagement jusqu'à la position de blocage, et, d'autre part, des moyens de verrouillage 50 automatiques en position de blocage de la rainure 20 sur le montant métallique 100.

Ces moyens de verrouillage 50 sont avantageusement distincts et situés à distance desdits moyens anti-arrachement 40, ce qui permet de dissocier les contraintes imposées verticalement sur le support de rail 10 selon l'axe longitudinal de glissement A1 et qui tendent à faire coulisser la rainure 20 du support de rail 10 le long du montant métallique 100, et les contraintes imposées horizontalement sur le support de rail 10 et qui tendent à sortir la rainure 20 hors du montant métallique 100.

Ici, le support de rail 10 présente globalement deux parois latérales 11, 12 planes et parallèles, liées l'une à l'autre par une paroi avant 13 en forme globale d'arche (voir figure 4), par une paroi de fond 23 interrompue en son centre (voir figure 3), et par des cloisons intérieures 14 de rigidification (voir figure 4).

La paroi de fond 23 du support de rail 10 s'étend à distance des bords arrière des parois latérales 11, 12. Elle délimite ainsi, avec les parties arrière 21, 22 des deux parois latérales 11, 12 (situées à l'arrière de la paroi de fond 23), la rainure 20 du support de rail 10.

La rainure 20 présente donc un axe longitudinal parallèle à la paroi de fond 23 et aux parois latérales 11, 12 du support de rail 10, qui est destiné à être confondu avec l'axe longitudinal de glissement A1 du montant métallique 100 lorsque le support de rail 10 est rapporté sur ce montant métallique 100.

La rainure 20 présente une section dont la forme est, en négatif, identique au jeu près à celle de la section du montant métallique 100. Plus précisément, les largeur et profondeur de cette rainure 20 sont respectivement égales, au jeu près, à la largeur de la paroi frontale 101 et à la largeur des bords tombants 102 du montant métallique 100.

De cette manière, lorsque le support de rail 10 est rapporté en position d'engagement sur le montant métallique 100, sa paroi de fond 23 et ses parois latérales 11, 12 s'appliquent contre la paroi frontale 101 et contre les bords tombants 102 du montant métallique 100.

Par conséquent, une fois le support de rail 10 rapporté sur le montant métallique 100, il présente deux uniques mobilités en translation, dont une mobilité axiale pour coulisser dans deux directions le long de ce montant métallique 100, et une mobilité transversale pour s'extraire du montant métallique 100.

Les moyens anti-arrachement 40 sont conçus de telle sorte que, après que le support de rail 10 a coulissé sur le montant métallique 100 depuis sa position d'engagement jusqu'à sa position de blocage, la mobilité transversale du support de rail 10 soit entravée. Ainsi, dans cette position, le support de rail 10 ne peut pas être retiré ou arraché du montant métallique 100.

Comme le montre plus particulièrement la figure 3, ces moyens anti-arrachement 40 comportent ici quatre plots 41 qui s'étendent par paire à partir des faces intérieures des deux parois latérales 11, 12 du support de rail 10, pour faire saillie à l'intérieur de la rainure 20. Chacun de ces plots 41 présente une face avant 41A (figure 4) qui s'étend parallèlement et à distance de la paroi de fond 23, et qui est tournée vers cette paroi de fond 23.

Le montant métallique 100 comporte en correspondance, pour l'accueil des plots 41 de chaque support de rail 10, quatre ouvertures latérales 110 rectangulaires qui s'étendent chacune en partie sur sa paroi frontale 101 et en partie sur l'un de ses bords tombants 102, et qui sont situées de manière à permettre l'engagement de la rainure 20 sur le montant métallique 100 sans que les plots 41 ne viennent interférer dans le montage.

Chaque ouverture latérale 110 présente donc un premier bord longitudinal situé dans la paroi frontale 101 du montant métallique 100, un second bord longitudinal situé dans l'un des bords tombants 102 du montant métallique 100, et deux bords d'extrémité situés en partie dans la paroi frontale et en partie dans l'un des bords tombants 102 du montant métallique 100.

Les ouvertures latérales 110 présentent des dimensions suivant l'axe longitudinal de glissement A1 au moins deux fois supérieures à celles des plots 41. Ainsi, une fois la rainure 20 engagée sur le montant métallique 100 en position d'engagement, celle-ci est libre de coulisser le long de ce montant métallique 100 entre deux positions d'extrémité dans chacune desquelles ses plots 41 viennent au contact des bords d'extrémité des ouvertures latérales 110.

Les butées qui permettent de bloquer la mobilité transversale de la rainure 20 lorsque le support de rail 10 est en position de blocage sont ici formées par des languettes 111 qui sont découpées dans les bords des ouvertures latérales 110. Chaque languette 111 s'étend plus précisément à partir du centre du premier bord longitudinal de l'ouverture latérale 110 correspondante, perpendiculairement à celui-ci, dans le plan de la paroi frontale 101 du montant métallique 110.

Ainsi, lorsque le support de rail 10 est en position de blocage sur le montant métallique, ses plots 41 sont situés à l'arrière des languettes 111 si bien que les faces arrière de ces languettes 111 forment des butées pour les faces avant 41A des plots 41.

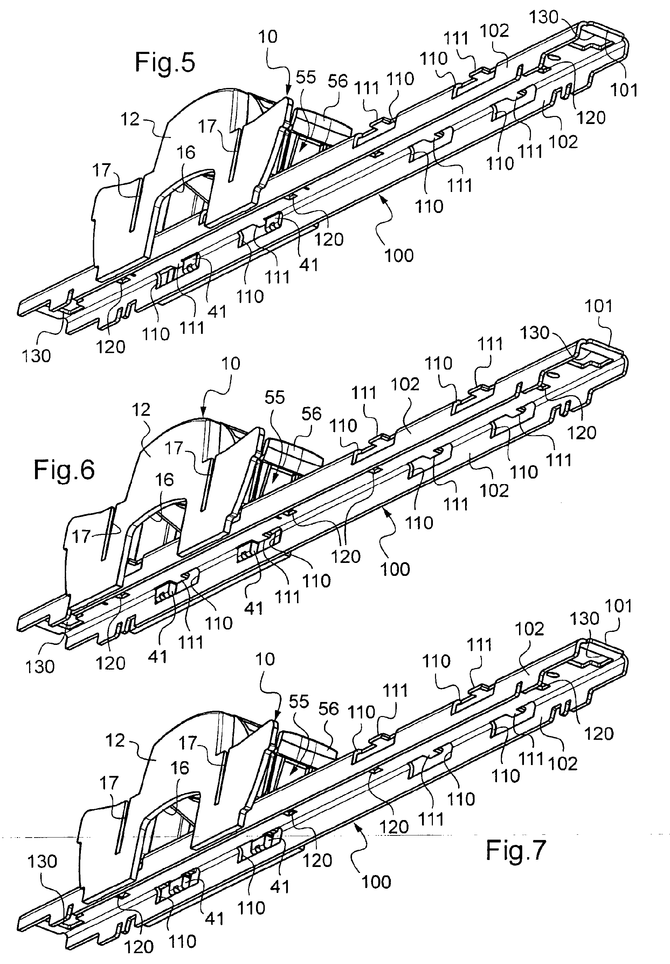

Grâce à la position centrale des languettes 111 sur les bords des ouvertures latérales 110, la rainure 20 du support de rail 10 peut être rapporté sur le montant métallique 100 en engageant ses plots 41 dans les ouvertures latérales 110, d'un côté ou de l'autre des languettes 111 (voir figures 5 et 6). Le montant métallique 100 offre donc deux positions d'engagement du support de rail 10, dans lesquelles les plots 41 du support de rail 10 sont situés d'un côté ou de l'autre des languettes 111, et une position centrale de blocage du support de rail 10 (figure 7), dans laquelle les plots 41 du support de rail 10 sont situés sous les languettes 111. Ainsi, dans un environnement confiné, l'installateur dispose de deux chemins d'accès pour bloquer le support de rail 10 sur le montant métallique 100, ce qui facilite son travail.

Avantageusement, la face avant 41A de chaque plot 41 du support de rail 10 est située à une distance de la paroi de fond 23 égale, au jeu près, à l'épaisseur de la paroi frontale 101 du montant métallique 100.

De cette manière, si les languettes 111 empêchent l'extraction de la rainure 20 hors du montant métallique 100 lorsque le support de rail 10 est en position centrale de blocage, elles ne font en revanche pas obstacle au coulissement de la rainure 20 le long du montant métallique 100, depuis l'une jusqu'à l'autre des deux positions d'extrémité.

Avantageusement, les plots 41 situés sur l'une des parois latérales 11 du support de rail 10 sont plus proches l'un de l'autre que ceux situés sur l'autre des parois latérales 12. Grâce à ce décalage, les plots 41 forment un moyen de détrompage qui autorise le montage du support de rail 10 sur le montant métallique 100 suivant une seule et unique orientation. Ainsi, une fois le support de rail 10 monté sur le montant métallique 10, il est correctement orienté pour accueillir le rail de montage 200.

Les moyens de verrouillage 50 permettent quant à eux de bloquer la mobilité axiale de coulissement du support de rail 10 le long du montant métallique 100 lorsqu'il est en position de blocage, de manière à immobiliser la rainure 20 sur le montant métallique 100.

Ici, ces moyens de verrouillage 50 sont des moyens d'encliquetage. Ils comportent, à chaque extrémité de la rainure 20, une patte élastiquement déformable 52 qui est découpée dans la paroi de fond 23 du support de rail 10. Cette patte élastiquement déformable 52 présente ainsi une extrémité rattachée à la paroi de fond 23 pour former une charnière 57, et une extrémité libre opposée qui s'étend à l'affleurement de l'extrémité correspondante de la rainure 20 et qui porte une dent d'encliquetage 51 biseautée faisant saillie vers l'arrière du support de rail 10.

La paroi frontale 101 du montant métallique 100 comporte en correspondance deux ouvertures centrales 120 rectangulaires agencées par rapport aux ouvertures latérales 110 de telle manière que, lorsque la rainure 20 coulisse sur le montant métallique 100 jusque sa position de blocage, les dents d'encliquetage 51 se positionnent en regard de ces ouvertures centrales 120 et s'y engagent automatiquement, grâce à leur élasticité.

Ces moyens de verrouillage 50 sont préférentiellement déverrouillables.

Tels que représentés sur les figures, ces moyens de verrouillage 50 comportent à cet effet deux leviers 55 allongés, présentant chacun un premier bord d'extrémité qui se raccroche à l'extrémité libre de l'une des pattes élastiquement déformable 52 et un second bord d'extrémité qui porte une plaquette 56 accessible à l'installateur.

Ces deux leviers 55 s'élèvent à partir des pattes élastiquement déformable 52, perpendiculairement à celles-ci, jusqu'à hauteur de la paroi avant 13 du support de rail 10. Ils présentent sur leurs longueurs des nervures de renforcement qui permettent de limiter leur déformation lorsqu'un installateur appuie sur les plaquettes 56.

Ils sont mobiles entre deux positions, dont une position de verrouillage et une position de déverrouillage.

En position de déverrouillage, lorsque l'installateur appuie sur la plaquette 56 du levier 55 correspondant, la patte élastiquement déformable 52 liée à ce levier 55 se déforme en pivotant autour de sa charnière 57. Ainsi, la dent d'encliquetage 51 portée par cette patte élastiquement déformable 52 sort de l'ouverture centrale 120 correspondante du montant métallique 100, de manière qu'elle n'empêche plus la rainure 20 du support de rail 10 de coulisser le long du montant métallique 100.

En position de verrouillage, lorsque l'installateur relâche la plaquette 56 du levier 55 correspondant, la patte élastiquement déformable 52 liée à ce levier 55 reprend sa position initiale. Ainsi, la dent d'encliquetage 51 portée par cette patte élastiquement déformable 52 s'engage dans l'ouverture centrale 120 correspondante du montant métallique 100, de manière qu'elle empêche la rainure 20 du support de rail 10 de coulisser le long du montant métallique 100 jusqu'en position d'engagement.

Pour éviter qu'un appui trop fort sur la plaquette 56 du levier 55 génère une déformation plastique de la patte élastiquement déformable 52 correspondante, il est prévu des moyens de butée de chaque levier 55 en position déverrouillée.

Tels que représentés sur la figure 2, ces moyens de butée comportent des nervures 15 (figure 2) qui s'étendent en saillie des faces intérieures des deux parois latérales 11, 12 du support de rail 10, derrière les plaquettes 56 des leviers 55. Ainsi, lorsque l'installateur appuie sur les plaquettes 56, celles-ci viennent en appui contre les nervures 15, ce qui limite leur débattement.

Le support de rail 10 comporte par ailleurs une plate-forme 60 de support du rail de montage 200.

Comme le montre plus particulièrement la figure 2, cette plate-forme 60 présente une forme de berceau en renfoncement dans la paroi avant 13 du support de rail 10.

Elle comporte plus précisément une paroi arrière 61 plane qui présente une ouverture centrale 62 d'accueil du corps fileté de la vis de fixation auto-taraudeuse 300. Comme le montre la figure 4, cette ouverture centrale 62 est bordée en face arrière d'un puits 65 dans lequel peut s'accrocher solidement le filetage de cette vis.

La plate-forme 60 présente en outre deux parois latérales 63 qui forment des moyens de guidage et de maintien latéral du rail de montage 200 sur la plate-forme 60, et qui sont surplombées par des rebords avant 66 sur lesquels sont destinés à reposer les bords du rail de montage 200. Le rail de montage 200 est ainsi situé à distance de la paroi arrière 61, ce qui permet de visser particulièrement solidement la vis de fixation auto-taraudeuse 300 dans le puits 65 pour accroître la rigidité de l'assemblage, en particulier vis-à-vis des efforts de torsion.

La plate-forme 60 présente en outre une paroi d'extrémité formée par une première des parois latérales 12 du support de rail 10, et qui permet ainsi de maintenir axialement le rail de montage 200 sur la plate-forme 60.

La seconde des parois latérales 11 du support de rail 10 forme quant à elle une butée qui permet de correctement positionner les appareillages électriques modulaires le long du rail de montage 200.

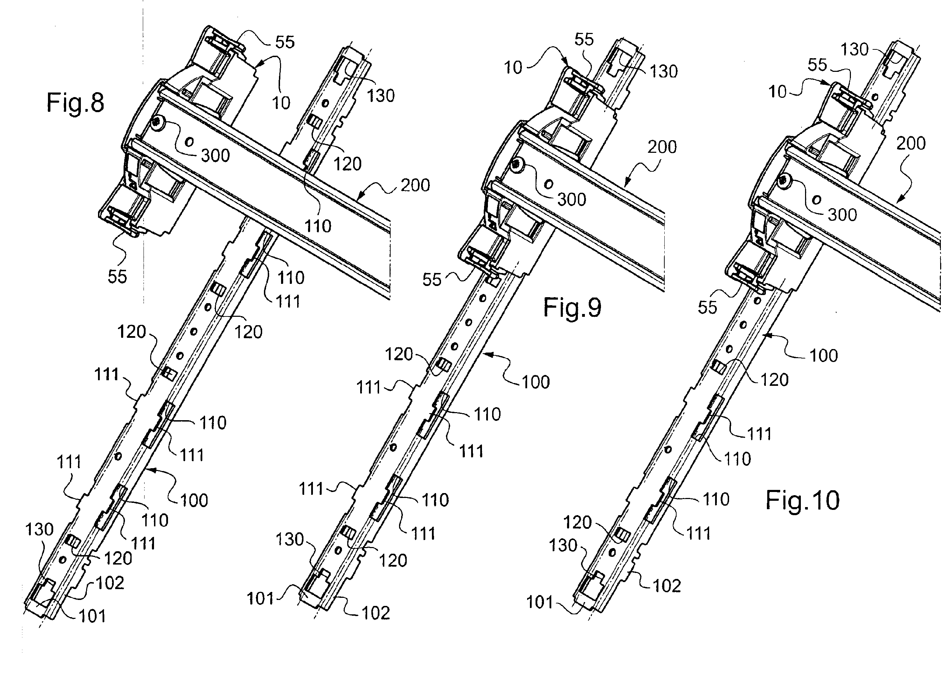

Comme le montrent plus particulièrement les figures 3 et 8, la première paroi latérale 12 présente par ailleurs une ouverture 16 qui facilite la manipulation du support de rail 10. Ici, cette ouverture 16 débouche sur le bord arrière de la première paroi latérale 12 et présente une hauteur supérieure à la profondeur de la rainure 20. Cette ouverture 16 reste ainsi accessible au doigt de l'installateur même lorsque le support de rail 10 est rapporté sur le montant métallique 100.

Cette première paroi latérale 12 comporte par ailleurs deux fentes droites 17 (figure 5 à 7) situées de part et d'autre de cette ouverture 16 et qui débouchent sur le bord avant de cette paroi latérale 12. Ces fentes sont agencées pour recevoir des supports de lyres, c'est-à-dire des supports de colliers adaptés à maintenir ensemble des câbles d'alimentation électrique des appareillages électriques modulaires.

Avantageusement, le support de rail 10 est formé d'une seule pièce monobloc par moulage d'une matière plastique. Il est donc peu onéreux à fabriquer.

Les opérations d'assemblage du châssis 1 sont plus particulièrement représentées sur les figures 8 à 10.

Au cours d'une première opération, deux supports de rail 10 sont fixés aux extrémités de l'un des rails de montage 200 au moyen de deux vis de fixation auto-taraudeuses 300 (figure 8).

Au cours d'une seconde opération, cet ensemble est monté sur les deux montants métalliques 100 en rapportant les rainures 20 des deux supports de rail 10 sur ces montants métalliques 100 de telle manière que les plots 41 des supports de rail 10 passent au travers des ouvertures latérales 110 des montants métalliques 100. Ainsi, les supports de rail 10 sont en position d'engagement (figure 9).

Au cours d'une troisième opération, l'installateur fait coulisser les supports de rail 10 le long des montants métalliques 100 de telle manière que les plots 41 des supports de rail 10 s'engagent sous les languettes 111 des montants métalliques 100. Les dents d'encliquetage 51 des supports de rail 10 s'engagent quant à elles alors dans les ouvertures centrales 120 des montants métalliques 100, ce qui verrouille les supports de rail 10 sur les montants métalliques 100. Ainsi, les supports de rail 10 sont en position de blocage (figure 10).

Pour démonter les supports de rail 10, l'installateur appuie simultanément sur les deux leviers 55 des deux supports de rail 10 de manière à déverrouiller les moyens d'encliquetage 50, puis il fait coulisser les supports de rail 10 le long des montants métalliques 100 jusqu'à leur position d'engagement. Ainsi, l'installateur peut extraire les supports de rail 10 des montants métalliques 100.

La présente invention n'est nullement limitée au mode de réalisation décrit et représenté, mais l'homme du métier saura y apporter toute variante conforme à son esprit.

En particulier, on pourra prévoir que les moyens anti-arrachement du support de rail ne comportent qu'un seul et unique plot, présentant alors préférentiellement des dimensions supérieures à celles de plots représentés sur les figures.

Ce plot s'étendra alors préférentiellement à partir de la paroi de fond de la rainure, et présentera une forme de L pour s'accrocher à la face arrière de la paroi frontale du montant métallique.

On pourra également prévoir que les moyens de verrouillage ne comportent qu'un levier et qu'une patte élastiquement déformable portant une unique dent d'encliquetage.

## Revendications

1. Support de rail de montage (200) d'appareillages électriques modulaires, comportant :
- une rainure (20) formant glissière, adaptée à être rapportée en position d'engagement sur un montant métallique (100) d'un châssis d'un coffret ou d'un tableau de distribution électrique (1) pour y coulisser, et
- des moyens de fixation (30) en position de blocage de la rainure (20) sur le montant métallique (100),
**caractérisé en ce que** lesdits moyens de fixation (30) comportent :
- des moyens anti-arrachement (40) comportent au moins une surface de butée (41A) qui est fixe par rapport à la rainure (20) et qui est agencées pour s'engager sous une butée complémentaire (111) du montant métallique (100) à la faveur d'un coulissement de la rainure (20) sur le montant métallique (100) depuis ladite position d'engagement jusqu'à ladite position de blocage, et
- des moyens de verrouillage (50) automatiques en position de blocage de la rainure (20) sur le montant métallique (100).

2. Support de rail (10) selon la revendication précédente, dans lequel lesdits moyens de verrouillage (50) sont distincts et situés à distance desdits moyens anti-arrachement (40).

3. Support de rail (10) selon l'une des revendications précédentes, dans lequel la rainure (20) est délimitée par un fond (23) et par deux parois latérales (21, 22) et dans lequel lesdits moyens anti-arrachement (40) comportent au moins une surface de butée (41A) qui s'étend à l'intérieur de la rainure (20), parallèlement et à distance dudit fond (23).

4. Support de rail (10) selon la revendication précédente, dans lequel ladite surface de butée (41A) appartient à un plot (41) qui s'étend à partir dudit fond (23) ou de l'une des deux parois latérales (21, 22).

5. Support de rail (10) selon la revendication précédente, dans lequel il est prévu au moins deux plots (41) qui s'étendent chacun à partir de l'une desdites parois latérales (21, 22) vers l'intérieur de la rainure (20).

6. Support de rail (10) selon la revendication précédente, dans lequel la rainure (20) présentant un axe longitudinal de glissement (A1), lesdits deux plots (41) sont décalés le long de cet axe longitudinal de glissement (A1).

7. Support de rail (10) selon l'une des revendications précédentes, dans lequel lesdits moyens de verrouillage (50) comportent au moins une dent d'encliquetage (51) à engager dans une ouverture (120) correspondante du montant métallique (100), qui est montée sur une patte élastiquement déformable (52).

8. Support de rail (10) selon la revendication précédente, dans lequel la rainure (20) est délimitée par un fond (23) et par deux parois latérales (21, 22) et dans lequel ladite patte élastiquement déformable (52) est découpée dans ledit fond (23).

9. Support de rail (10) selon la revendication précédente, dans lequel il est prévu deux dents d'encliquetage (51) qui sont respectivement situées aux deux extrémités de la rainure (20).

10. Support de rail (10) selon l'une des revendications précédentes, dans lequel lesdits moyens de verrouillage (50) sont déverrouillables.

11. Support de rail (10) selon les revendications 7 et 10, dans lequel lesdits moyens de verrouillage (50) comportent un levier (55) accessible à l'installateur, qui est relié à ladite patte élastiquement déformable (52) et qui est mobile entre une position de verrouillage dans laquelle ladite patte élastiquement déformable (52) n'est pas déformée et une position de déverrouillage dans laquelle ladite patte élastiquement déformable (52) est déformée.

12. Support de rail (10) selon l'une des revendications précédentes, formé d'une seule pièce monobloc par moulage d'une matière plastique.

13. Châssis (1) de coffret ou tableau de distribution électrique comportant :
- deux montants métalliques (100) qui présentent chacun une paroi frontale (101) bordée de deux bords tombants (102), et
- au moins un rail de montage (200) pour appareillages électriques modulaires,
**caractérisé en ce qu'**il comporte au moins deux supports de rail (10) selon l'une des revendications précédentes, qui portent ledit rail de montage (200) et dont les rainures (20) sont rapportées sur les deux montants métalliques (100) de telle sorte que leurs moyens anti-arrachement (40) sont engagés sous des butées complémentaires (111) desdits montants métalliques (100).

14. Châssis (1) selon la revendication précédente, dans lequel chaque montant métallique (100) comporte au moins une première ouverture (110) située au moins en partie dans sa paroi frontale (101), et dans lequel la butée complémentaire de chaque montant métallique (100) est formée par une languette (111) qui s'étend à partir d'un bord de cette première ouverture (110), dans le plan de la paroi frontale (101) dudit montant métallique (100).

15. Châssis (1) selon la revendication précédente, dans lequel chaque montant métallique (100) présente un axe longitudinal de glissement (A1) et dans lequel ladite première ouverture (110) s'étend de part et d'autre de ladite languette (111) selon cet axe longitudinal de glissement (A1).

16. Châssis (1) selon l'une des trois revendications précédentes, dans lequel chaque montant métallique (100) comporte au moins une seconde ouverture (120) située au moins en partie dans sa paroi frontale (101) et dans lequel les moyens de verrouillage (50) du support de rail (10) comportent au moins une dent d'encliquetage (51) à engager dans cette seconde ouverture (120).

## Claims

1. A support for supporting a mounting rail (200) for mounting modular electrical equipment, said support comprising:
• a slideway-forming groove (20) that is adapted to be fitted in an engagement position on a metal upright (100) of a frame (1) of an electrical panel or box, so as to slide thereon; and
• fastener means (30) for fastening the groove (20) in a blocking position on the metal upright (100);
the support being **characterized in that** said fastener means (30) comprise:
• anti-removal means (40) including at least one abutment surface (41A) that is stationary relative to the groove (20), and that is arranged so as to engage below a complementary abutment (111) of the metal upright (100) by sliding the groove (20) over the metal upright (100) from said engagement position to said blocking position; and
• locking means (50) for automatically locking the groove (20) in the blocking position on the metal upright (100).

2. A rail support (10) according to the preceding claim, wherein said locking means (50) are distinct and are situated at a distance from said anti-removal means (40).

3. A rail support (10) according to either preceding claim, wherein the groove (20) is defined by a bottom wall (23) and by two side walls (21, 22), and wherein said anti-removal means (40) include at least one abutment surface (41A) that extends inside the groove (20), parallel to, and at a distance from, said bottom wall (23).

4. A rail support (10) according to the preceding claim, wherein said abutment surface (41A) forms part of a lug (41) that extends from said bottom wall (23) or from one of the two side walls (21, 22).

5. A rail support (10) according to the preceding claim, wherein there are provided at least two lugs (41), each of which extends from one of said side walls (21, 22) towards the inside of the groove (20).

6. A rail support (10) according to the preceding claim, wherein the groove (20) presents a longitudinal slide axis (A1), and said two lugs (41) are offset along the longitudinal slide axis (A1).

7. A rail support (10) according to any preceding claim, wherein said locking means (50) include at least one snap-fastener tooth (51) for engaging in a corresponding opening (120) of the metal upright (100), which snap-fastener tooth is mounted on an elastically-deformable tab (52).

8. A rail support (10) according to the preceding claim, wherein the groove (20) is defined by a bottom wall (23) and by two side walls (21, 22), and wherein said elastically-deformable tab (52) is cut out from said bottom wall (23).

9. A rail support (10) according to the preceding claim, wherein there are provided two snap-fastener teeth (51) that are situated respectively at the two ends of the groove (20).

10. A rail support (10) according to any preceding claim, wherein said locking means (50) are unlockable.

11. A rail support (10) according to claim 7 and claim 10, wherein said locking means (50) include a lever (55) that is accessible to the installer, that is connected to said elastically-deformable tab (52), and that is movable between a locking position in which said elastically-deformable tab (52) is not deformed, and an unlocking position in which said elastically-deformable tab (52) is deformed.

12. A rail support (10) according to any preceding claim, formed as a single part by molding a plastics material.

13. A frame (1) of an electrical panel or box, said frame comprising:
• two metal uprights (100), each presenting a front wall (101) that is bordered by two dropped edges (102); and
• at least one mounting rail (200) for mounting modular electrical equipment;
the frame being **characterized in that** it includes at least two rail supports (10) according to any preceding claim, that carry said mounting rail (200), and that have grooves (20) that are fitted on the two metal uprights (100) in such a manner that their anti-removal means (40) are engaged below complementary abutments (111) of said metal uprights (100).

14. A frame (1) according to the preceding claim, wherein each metal upright (100) includes at least one first opening (110) that is situated, at least in part, in its front wall (101), and wherein the complementary abutment of each metal upright (100) is formed by a tab (111) that extends from one edge of the first opening (110), in the plane of the front wall (101) of said metal upright (100).

15. A frame (1) according to the preceding claim, wherein each metal upright (100) presents a longitudinal slide axis (A1), and wherein said first opening (110) extends on either side of said tab (111) along the longitudinal slide axis (A1).

16. A frame (1) according to any one of the three preceding claims, wherein each metal upright (100) includes at least one second opening (120) that is situated, at least in part, in its front wall (101), and wherein the locking means (50) of the rail support (10) include at least one snap-fastener tooth (51) for engaging in the second opening (120).

## Patentansprüche

1. Montageschienenhalterung (200) für moduläre elektrische Geräte, die umfasst:
- eine Gleitschiene bildende Rille (20), die sich in Eingriffposition auf einem Metallträger (100) eines Gestells eines elektrischen Verteilerkastens oder einer elektrischen Verteilertafel (1) anbringen lässt, um darauf zu gleiten, und
- Befestigungsmittel (30) in Blockierposition der Rille (20) auf dem Metallträger (100), **dadurch gekennzeichnet, dass** die Befestigungsmittel (30) umfassen:
- Mittel (40), die ein Herausreißen verhindern und mindestens eine Anschlagfläche (41A) umfassen, die in Bezug zur Rille (20) fest angeordnet ist, um unter einem komplementären Anschlag (111) des Metallträgers (100) einzugreifen, um das Gleiten der Rille (20) auf dem Metallträger (100) von der Eingriffsposition ausgehend bis hin zur Blockierposition zu begünstigen, und
- automatische Verriegelungsmittel (50) für die Blockierposition der Rille (20) auf dem Metallträger (100).

2. Schienenhalterung (10) nach vorausgehendem Anspruch, bei der sich die Verriegelungsmittel (50) von den Mitteln, die ein Herausreißen (40) verhindern, unterscheiden und entfernt voneinander angeordnet sind.

3. Schienenhalterung (10) nach einem der vorausgehenden Ansprüche, bei der die Rille (20) durch einen Boden (23) und zwei Seitenwände (21,22) abgegrenzt ist und in der die Mittel, die ein Herausreißen (40) verhindern, mindestens eine Anschlagfläche (41A) umfassen, die sich parallel zum und vom Boden (23) entfernt in die Innenseite der Rille (20) erstreckt.

4. Schienenhalterung (10) nach vorausgehendem Anspruch, bei der die Anschlagfläche (41A) zu einem Bodenkontakt (41) gehört, der sich ab dem Boden (23) oder ab einer der beiden Seitenwände (21,22) erstreckt.

5. Schienenhalterung (10) nach vorausgehendem Anspruch, bei der mindestens zwei Bodenkontakte (41) vorgesehen sind, die sich jeweils ab einer der Seitenwände (21,22) zur Innenseite der Rinne (20) erstrecken.

6. Schienenhalterung (10) nach vorausgehendem Anspruch, bei der die Rille (20) eine längliche Gleitachse (A1) aufweist und die zwei Bodenkontakte (41) entlang dieser länglichen Gleitachse (A1) versetzt sind.

7. Schienenhalterung (10) nach einem der vorausgehenden Ansprüche, bei der die Verriegelungsmittel (50) mindestens einen Einrastzahn (51) umfassen, der in eine entsprechende Öffnung (120) des Metallträgers (100) eingreift und auf einer elastisch verformbaren Lasche (52) montiert ist.

8. Schienenhalterung (10) nach vorausgehendem Anspruch, bei der die Rille (20) durch einen Boden (23) und durch zwei Seitenwände (21, 22) abgegrenzt ist und in der die elastisch verformbare Lasche (52) im Boden (23) zugeschnitten ist.

9. Schienenhalterung (10) nach vorausgehendem Anspruch, bei der zwei Einrastzähne (51) vorgesehen sind, die jeweils an den beiden Enden der Rille (20) vorgesehen sind.

10. Schienenhalterung (10) nach einem der vorausgehenden Ansprüche, bei der die Verriegelungsmittel (50) entriegelt werden können.

11. Schienenhalterung (10) nach den Ansprüchen 7 und 10, bei der die Verriegelungsmittel (50) einen für den Installateur zugänglichen Hebel (55) umfassen, der mit der elastisch verformbaren Lasche (52) verbunden ist und zwischen einer Verriegelungsposition, in der die elastisch verformbare Lasche (52) nicht verformt ist, und einer Entriegelungsposition, in der die elastisch verformbare Lasche (52) verformt ist, beweglich ist.

12. Schienenhalterung (10) nach einem der vorausgehenden Ansprüche, die aus einem einzigen Stück durch Gießen eines Kunststoffes geformt wird.

13. Gestell (1) für einen elektrischen Verteilerkasten oder eine elektrische Verteilertafel, das umfasst:
- zwei Metallträger (100), die jeweils eine Frontwand (101) aufweisen, die von zwei abfallenden Kanten (102) umrandet ist, und
- mindestens eine Montageschiene (200) für modulierbare elektrische Geräte,
**dadurch gekennzeichnet, dass** es mindestens zwei Schienenhalterungen (10) nach einem der vorausgehenden Ansprüche umfasst, die die Montageschiene (200) halten und deren Rillen (20) so auf die zwei Metallträger (100) aufgesetzt werden, dass ihre Mittel, die ein Herausreißen verhindern (40), unter den komplementären Anschlägen (111) der Metallträger (100) eingreifen.

14. Gestell (1) nach vorausgehendem Anspruch, bei dem jeder Metallträger (100) mindestens eine erste Öffnung (110) umfasst, die sich zumindest teilweise in seiner Frontwand (101) befindet, und bei dem der komplementäre Anschlag jedes Metallträgers (100) durch eine Zunge (111) gebildet wird, die sich ab einem Rand dieser ersten Öffnung (110) in der Ebene der Frontwand (101) des Metallträgers (100) erstreckt.

15. Gestell (1) nach vorausgehendem Anspruch, bei dem jeder Metallträger (100) eine längliche Gleitachse (A1) aufweist und bei dem sich die erste Öffnung (110) auf beiden Seiten der Zunge (111) entlang dieser länglichen Gleitachse (A1) erstreckt.

16. Gestell (1) nach einem der drei vorausgehenden Ansprüche, bei dem jeder Metallträger (100) mindestens eine zweite Öffnung (120) aufweist, die sich zumindest teilweise in seiner Frontwand (101) befindet, und bei dem die Verriegelungsmittel (50) der Schienenhalterung (10) mindestens einen Einrastzahn (51) umfassen, der in diese zweite Öffnung (120) eingreifen kann.
